# EUROPEAN PATENT SPECIFICATION

(11) **EP 1 444 489 B1**
(45) Date of publication and mention of the grant of the patent: **20.06.2012**
(21) Application number: 02777388.6
(22) Date of filing: 14.11.2002
(51) Int. Cl.: G01G 11/00

(54) **METHOD AND ARRANGEMENT FOR WEIGHING SLABS**
VERFAHREN UND ANORDNUNG ZUM WÄGEN VON BARREN
PROCEDE ET SYSTEME POUR PESER DES PLAQUES

(30) Priority: 14.11.2001 FI 20012216
(43) Date of publication of application: 11.08.2004
(73) Proprietor: Paroc Oy Ab, 01300 Vantaa (FI)
(72) Inventor: TALONEN, Pekka, FIN-21600 Parainen (FI)
(74) Representative: Suominen, Kaisa Liisa
(86) International application number: PCT/FI2002/000902
(87) International publication number: WO 2003/042642

(56) References cited:
- WO-A1-02/54025
- WO-A1-99/36753
- US-A- 5 576 520

## Description

The present invention relates to a method and an apparatus for continuous weighing of slabs or groups of slabs. The present invention relates particularly to weighing of mineral wool slabs in the manufacture of mineral wool.

Mineral wool, such as rock wool, is made by melting suitable mineral-containing raw materials, such as diabase, lime stone or slag, in a melting furnace. The obtained silicate-containing mineral melt is discharged from the melting furnace in the form of a melt jet to a fiberising apparatus, such as a spinning machine, in which the melt is formed into mineral fibres. Binder may be applied on the mineral fibres, either during the forming of fibres or afterwards.

The formed mineral fibres are collected as a fibre mat, which can be processed in several different ways, for instance by curing and compressing it. A thicker fibre mat can be made by placing a number of fibre mat layers on top of each other, for instance in a pendulum process. The obtained fibre mat is usually split in the process direction and cut in the process cross direction, which provides mineral wool slabs having the desired width and length. As the mineral wool slabs have obtained their final form, they are weighed in order to control whether they have the correct product-specific density. If they do not fulfil the specified density requirements they are either torn into blowing wool or returned to the manufacturing process. If the mineral wool slabs meet the quality criteria they are transported further to a packing machine.

It is well known that mineral wool can be used for many different purposes. Among other things it is used as insulation material in construction work, as acoustic slabs, and other kind of insulation. The size of the mineral wool slabs, i.e. their width and length, and their density is determined by the intended use and by the wool quality, among other things. On a production line mineral wool slabs of different qualities and for different purposes are produced. Therefore the length of the slabs can vary quite much from one product to the next, e.g. between 0.5 and 4 metres. However, large differences in the slab length can cause problems in the weighing of the mineral wool slabs.

The weighing of mineral slabs occurs continuously on a weighing conveyor. The mineral wool slabs are conveyed separately or as slab groups to the weighing conveyor, where the slabs are weighed while they are located on the weighing surface of the weighing conveyor. The weighing period for a slab group must be of sufficient length, so that the slab group can be weighed with sufficient accuracy. Usually a margin of error of 3 to 5 % can be allowed in the weighing. The slabs or slab groups located one after another must be separated in the process direction before the weighing, so that only one slab group at a time can reach the weighing apparatus. If more than one slab group is located simultaneously on the weighing conveyor, this of course generates erroneous weighing results.

For the weighing of slabs of a certain length a weighing conveyor has a certain optimal length, so that the successive slabs can be weighed separately. The length of the weighing conveyor should be such that the length of a slab or a slab group and the distance between the slabs or slab groups is always equally long or longer than the weighing apparatus, otherwise more slabs or slab groups are simultaneously transferred onto the weighing conveyor. If the production is changed from one slab length to another, e.g. from 3.5 m to 0.5 m, the weighing should also be changed to another weighing conveyor having a suitable length. If a weighing conveyor designed for slabs of 3.5 m is used for the weighing of slabs with a length of 0.5 m, then its weighing distance is absolutely too long, which means that a number of successive slab groups with the length of 0.5 m are located on the weighing conveyor at the same time. As stated above, this results in erroneous weighing results.

A solution to the problem has been sought by increasing the speed of the slabs in the weighing step. However, a high speed generates undesired and harmful vibrations, which means that it is not possible to increase the speed above a certain maximum speed. There is also another problem. If the speed is increased, then also the weighing distance should be increased, so that a weighing period of sufficient length is maintained.

A solution to the problem has also been sought by using a number of weighing conveyors of different lengths arranged one after the other when mineral wool slabs of different lengths are produced on the one production line. Then the actual weighing is made at that weighing conveyor, which has the most suitable length in relation to the produced slab length. Then the other weighing conveyors operate only as normal conveyors. Then the length of the production line will of course be long, which induces costs in the form of longer production plants, the acquisition of more weighing conveyors, etc.

WO 02/054025 discloses a method of weighing objects on conveyor belts comprising a first and a second conveyor, which comprise separate paths, wherein there are free passages to enable the two conveyors to overlap and to be displaced. Thus the active lengths of the conveyors can be varied.

WO 99/36753 discloses a conveyor-type weighing unit comprising two or more weighing-platforms.

US 5,576,520 discloses a method and apparatus for use in weighing products having circular or oval footprint configurations.

Therefore an object of the invention is to provide a method and an apparatus in the manufacturing of mineral wool where the above-mentioned disadvantages are minimised.

An objective is to provide a method and an apparatus which can be used in weighing slabs or groups of slabs having varying lengths.

These objectives are attained with a method and an apparatus, which have the characteristics presented in the characterising part of the enclosed independent claims.

In a typical method for weighing slabs or groups of slabs according to the present invention
- the slabs to be weighed are directed, separately or in groups, as weighing units over the active weighing surface of a weighing conveyor, and
- they are weighed while they are located on the active weighing surface. According to the invention the active weighing surface with a variable length in the weighing conveyor is adjusted so that in normal operation only one weighing unit of slabs are located on the active weighing surface during the weighing.

A typical apparatus according to the present invention for weighing slabs or groups of slabs comprises a weighing conveyor comprising at least two belts arranged side by side, and an active weighing surface formed on them, over which the slabs to be weighed are directed either separately or in groups as a weighing unit. According to the invention the weighing conveyor has an active weighing surface with a variable length, whereby the length of the active weighing surface is adjusted so that in normal operation only one weighing unit of slabs is located on the active weighing surface during the weighing.

It has now surprisingly been found that by arranging a variation conveyor at the weighing conveyor so that the conveying surface of the variation conveyor can lift the slabs or slab groups from the weighing conveyor as they are transported a certain predetermined length over the weighing surface, then the so-called active weighing surface of the weighing conveyor can be predetermined, and thus it can be variable. The transport surface of the variation conveyor, i.e. belts, can be led between and/or at the side of the belts of the weighing conveyor, so that the active weighing length of the weighing conveyor can be adjusted by lifting or lowering these. This makes it possible to weigh only one weighing unit at a time, even if the slab length or process speed varies. The length of the active weighing surface can thus be adjusted according to the length of the weighing unit to be weighed. A weighing unit usually comprises a slab group, which comprises of a number of slabs cut to the correct width and length, or a single slab. As the length of the weighing conveyor can be adjusted according to different process parameters, such as product quality, slab length, or line speed, then it is not necessary to arrange several weighing conveyors with different weighing lengths in succession, which reduces both the space required and the costs of construction and costs for apparatuses.

The present invention relates to continuous weighing of weighing units, such as slabs or slab groups. The slab groups cut to a predetermined length are continuously conveyed to the weighing conveyor, where they are weighed as they are located on the active weighing surface of the weighing conveyor. The active weighing surface comprises that part of the surface of the weighing conveyor where the weighing is performed. According to a preferred embodiment of the present invention the length of the active weighing surface can be adjusted to the desired weighing length by lifting the slabs or slab groups up from the active weighing surface of the weighing conveyor when they have been transported over a distance, which corresponds to the desired weighing length, to a level above the active weighing surface of the weighing conveyor.

According to the present invention the active weighing length can be adjusted by lifting the belts of the variation conveyor at a desired length of the weighing conveyor, i.e. at the inactive portion of the weighing surface, to a higher level than the active weighing surface. Then the slabs or slab groups are lifted away from the weighing conveyor at this inactive portion of the weighing surface, and the active weighing length becomes shorter than the total length of the weighing conveyor. When the variation conveyor is not used its belts are lowered to a level, which is on the same level or preferably lower than the active weighing surface of the weighing conveyor. Then the length of the active weighing surface equals the total length of the weighing conveyor.

According to an advantageous embodiment of the present invention the weighing conveyor is a multi-belt conveyor, which is supported on four sensors, one in each corner. A torque bracket is arranged in each corner in order to prevent the weighing conveyor from swinging as a slab group is travelling over it.

According to a preferred embodiment of the present invention the variation conveyor is a multi-belt conveyor. The belts of the variation conveyor are arranged between and/or on the sides of the belts of the weighing conveyor. Slabs or groups of slabs are lifted up from the active weighing surface of the weighing conveyor by moving the belts of the variation conveyor upwards between and/or on the sides of the belts of the weighing conveyor. The number of belts in a variation conveyor can be freely chosen as required. The belt width is preferably chosen so that the belts can be located between the belts of the weighing conveyor. The belts of the variation conveyor should not touch the belts of the weighing conveyor. All belts of the variation conveyor do not have to be equally wide. For instance those belts, which are arranged on the sides of the weighing conveyor, could be wider than those belts, which are arranged between the belts of the weighing conveyor. The length of the variation conveyor can be freely chosen as required.

According to a preferred embodiment of the present invention the length of the active weighing surface can be stepwise adjusted by a movable variation conveyor, which is articulated, in order to lift up the slabs or groups of slabs from the active weighing surface of the weighing conveyor. The variation conveyor is articulated by one or more joints or the like, so that the transport surface of the variation conveyor can be moved vertically, for instance so that the transport surface moves obliquely upwards. The length of the variation conveyor is divided by the joints into transport portions, the number of which can be determined as required. The transport portions are not necessarily equally long. A required number of these portions can be lifted when the variation conveyor is used to adjust the length of the weighing conveyor. Thereby the adjustment of the active weighing length of the weighing conveyor is made stepwise.

According to another embodiment of the present invention it is possible to adjust the length of the active weighing surface by a movable variation conveyor, which is pushed in between and/or to the sides of the belts of the weighing conveyor, in order to lift up the slabs or groups of slabs from the active weighing surface of the weighing conveyor. The belts of the variation conveyor can be pushed in to different depths between the belts of the weighing conveyor. Then the adjustment of the active weighing length of the weighing conveyor can be made continuously without steps. The variation conveyor can be rotated around its end, so that the transport surface can be made to move obliquely upwards.

Some embodiments of the invention are described in more detail below with reference to the figures below, in which
Figure 1 shows schematically a top view of an embodiment of a portion of an apparatus for weighing slabs, according to an embodiment of the present invention,
Figure 2a shows schematically a side view of a portion of an apparatus for weighing slabs, according to an embodiment of the present invention in operation,
Figure 2b shows schematically a side view of a portion of an apparatus for weighing slabs, according to an embodiment of the present invention not in operation,
Figure 3 shows schematically a side view of another apparatus for weighing slabs according to an embodiment of the present invention in operation.

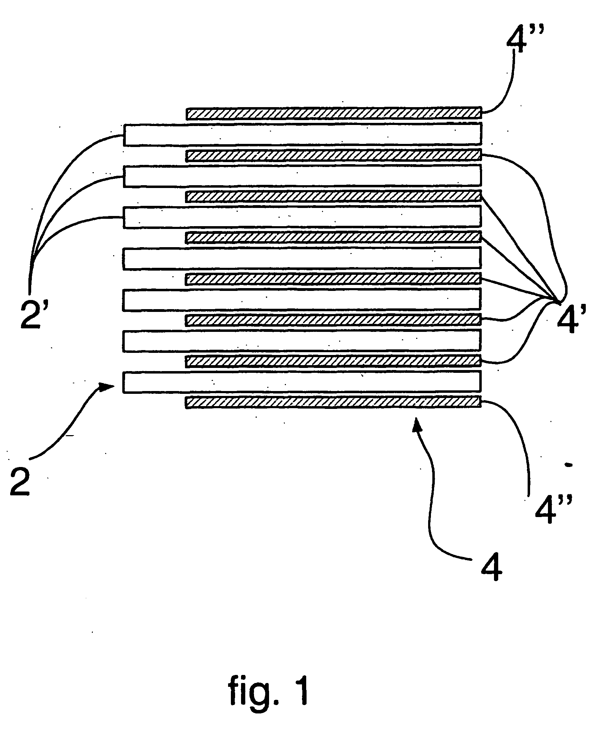

Figure 1 shows schematically in a top view an embodiment of a portion of the apparatus according to the present invention. The belts 4' of the variation conveyor 4 are arranged between the belts 2' of the weighing conveyor 2, and the belts 4" are arranged on each side of the belts 2' of the weighing conveyor 2. In the figure all belts 4', 4" of the variation conveyor 4 have the same width, but they can have different widths, when required.

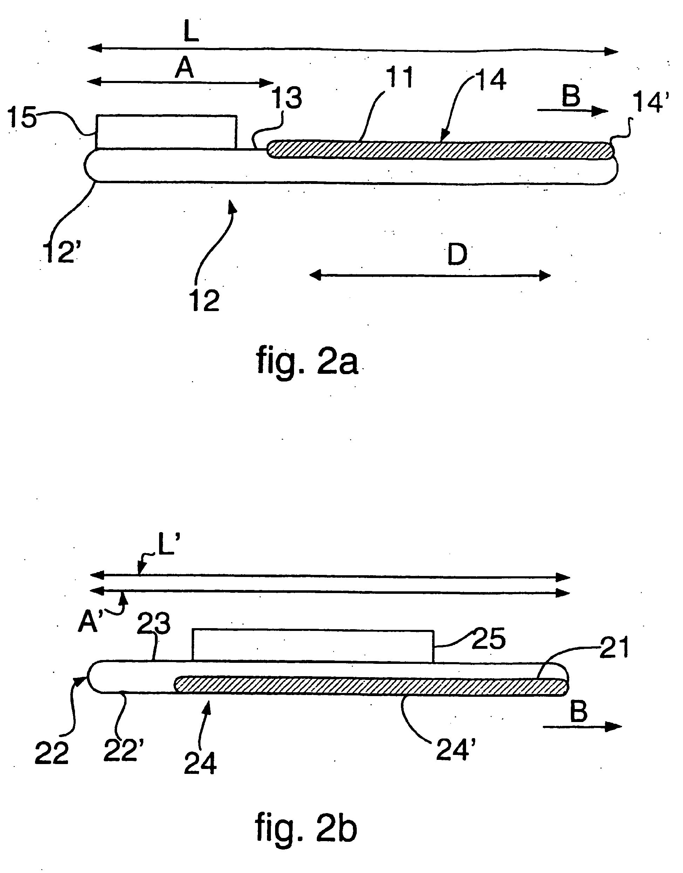

Figure 2a shows schematically a side view of a portion of an apparatus for weighing slabs, according to an embodiment of the present invention in operation. Figure 2b shows only one of the belts 14' of the variation conveyor 14, and one belt 12' of the weighing conveyor 12. A slab 15 moving in the process direction, indicated by an arrow B, is weighed while it is located on the active weighing surface 13. The belt surface 11 of the variation conveyor 14 has been moved to a level higher than the belts 12' of the weighing conveyor 12 in order to lift the slab away from the active weighing surface 13. The length A of the active weighing surface 13 in figure 2b is clearly shorter than the total length L of the weighing conveyor 14. The belts 14' of the variation conveyor 14 can be pushed in between the belts 12' of the weighing conveyor 12, which is indicated by the arrow D. This makes it possible to adjust without steps the length A of the active weighing surface 13.

Figure 2b shows schematically a side view of a portion of an apparatus, according to an embodiment of the present invention not in operation. Figure 2b shows only one belt 24' of the variation conveyor 24 and one belt 22' of the weighing conveyor 22. The process direction is indicated by an arrow B in the figure. A long slab 25 moving in the process direction is weighed while it is located on the active weighing surface 23. In figure 2b, where a long slab is weighed, the belt surface 21 of the variation conveyor remains at a level which is lower than the active weighing surface 23 of the belts 22' of the weighing conveyor 22. In figure 2b the length A' of the active weighing surface 23 equals the total length L' of the belts 22' of the weighing conveyor.

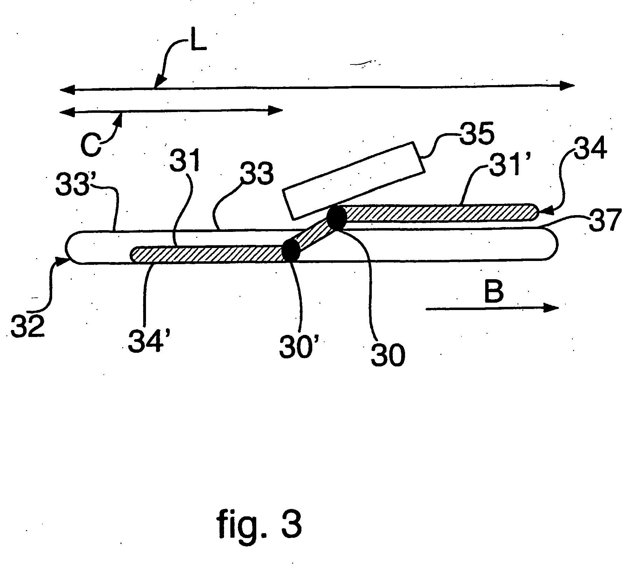

Figure 3 shows schematically a side view of another apparatus according to another embodiment of the present invention. The belt 34' of the variation conveyor 34 has two joints 30, 30', which make it possible to lift a portion 31' of the belt surface 31 of the variation conveyor 34 to a level, which is higher up than the weighing surface 33 of the weighing conveyor 32. Thereby a portion 37 of the weighing surface will be inactive. The slab 35 transported in the process direction, indicated by the arrow B in the figure, is weighed while it is located on the active portion 33' of the weighing surface 33. The active surface 33' has a length C. The variation conveyor 34 lifts the slab 35 up and transports it away from the active weighing surface 33'. The length C of the active weighing surface 33' is considerably shorter than the total length L of the weighing conveyor 32. Figure 3 shows only one belt 34' of the belts of the variation conveyor 34, and one belt 32' of the belts of the weighing conveyor 32.

With the aid of the present invention the length of the weighing conveyor can be changed in an easy and rapid manner as the length of the produced slabs is changed. Based on the weight of the slabs, the processing speed and/or the desired weighing period, it is possible to calculate the length of the active weighing surface. By lifting or lowering a sufficiently long portion of the variation conveyor it is possible to change the active weighing surface so that it is adjusted to match the changed production requirements.

A weighing arrangement, which corresponds to that presented here, can of course be used for weighing other slab-like products having a predetermined length, in addition to slabs of mineral wool, such as glass wool slabs, plywood boards, metal sheets, and so on.

Even if the invention was described with reference to embodiments, which at the present are seen as the most practical and preferred, it is obvious that the invention shall not be limited to the embodiments described above, but the invention is intended to comprise also different modifications and equivalent technical solutions within the scope of the enclosed claims.

## Claims

1. A method in the manufacture of mineral wool for the continuous weighing of slabs (15, 25, 35) or groups of slabs with the aid of a weighing conveyor (2, 12, 22) provided with an active weighing surface (13, 23, 33) and having a weighing surface with a variable length, in which method
- the slabs (15, 25, 35) to be weighed are directed, separately or in groups, as weighing units over the active weighing surface (13, 23, 33) of a weighing conveyor (2, 12, 22),
- the slabs (15, 25, 35)are weighed while they are located on the active weighing surface (13, 23, 33),
- the length of the weighing surface is adjusted so that in normal operation only one weighing unit of slabs (15, 25, 35) is located on the active weighing surface (13, 23, 33) during the weighing,
**characterised in that** the length of the active weighing surface (13, 23, 33) is adjusted to the desired weighing length by lifting with the aid of a variation conveyor (4, 14, 24) the slabs (15, 25, 35) up from the active weighing surface (13, 23, 33) of the weighing conveyor (2, 12, 22) as the slabs (15, 25, 35) have been transported a distance, which corresponds to the desired weighing length, to a level above the weighing surface of the weighing conveyor (2, 12, 22).

2. A method according to claim 1, **characterised in that** the length of the active weighing surface (13, 23, 33) is adjusted on the basis of the length of the slabs (15, 25, 35) to be weighed.

3. A method according to claim 1, **characterised in that** the slabs (15, 25, 35) are lifted up from the active weighing surface (13, 23, 33) of the weighing conveyor (2, 12, 22) by moving the belts of the variation conveyor (4, 14, 24) upwards between and/or on the side of the belts of the weighing conveyor (2, 12, 22).

4. A method according to claim 1, **characterised in that** the length of the active weighing surface (13, 23, 33) is adjusted in a stepless manner with the aid of a movable variation conveyor (4, 14, 24), which is pushed in between the belts of the weighing conveyor (2, 12, 22), in order to lift up the slabs (15, 25, 35) or groups of slabs from the active weighing surface (13, 23, 33) of the weighing conveyor (2, 12, 22).

5. A method according to claim 1, **characterised in that** the length of the active weighing surface (13, 23, 33) is adjusted step-wise with the aid of an articulated movable variation conveyor (4, 14, 24), in order to lift up the slabs (15, 25, 35) or groups of slabs from the active weighing surface (13, 23, 33) of the weighing conveyor (2, 12, 22).

6. An apparatus in the manufacture of mineral wool for continuous weighing slabs (15, 25, 35) or groups of slabs, which apparatus comprises
- a weighing conveyor (2, 12, 22), which comprises
- at least two belts arranged side by side,
- an active weighing surface (13, 23, 33), over which the slabs (15, 25, 35) to be weighed are transported, separately or in groups, as a weighing unit, the active weighing surface (13, 23, 33) having a variable length, where the length of the active weighing surface (13, 23, 33) is adjusted so that in normal operation slabs (15, 25, 35) of only one weighing unit are located on the active weighing surface (13, 23,33)
**characterised in that** the apparatus comprises a variation conveyor (4, 14, 24), which is arranged to be movable with respect to the weighing conveyor (2, 12, 22), so that the variation conveyor (4, 14, 24) lifts the slabs (15, 25, 35) to be weighed from the active weighing surface (13, 23, 33) of the weighing conveyor (2, 12, 22), when the slabs (15, 25, 35) have been transported a distance, which corresponds to the desired weighing length, up to a level above the weighing surface of the weighing conveyor (2, 12, 22) during the weighing.

7. Apparatus according to claim 6, **characterised in that** the length of the active weighing surface (13, 23, 33) of the weighing conveyor (2, 12, 22) is adjusted on the basis of the length of the slabs (15, 25, 35) to be weighed.

8. Apparatus according to claim 6, **characterised in that** the belts of the variation conveyor (4, 14, 24) are arranged between and/or on the side of the belts of the weighing conveyor (2, 12, 22).

9. Apparatus according to claim 6, **characterised in that** the variation conveyor (4, 14, 24) is articulated with the aid of one or more joints (30, 30').

10. Apparatus according to claim 6, **characterised in that** the variation conveyor (4, 14, 24) is movable, so that its belts can be pushed in between the belts of the weighing conveyor (2, 12, 22) in a stepless manner.

11. Apparatus according to claim 6, **characterised in that** the variation conveyor (4, 14, 24) can be rotated around its end, so that the transport surface of the variation conveyor (4, 14, 24) can be made to move obliquely upwards.

## Patentansprüche

1. Verfahren in der Herstellung von Mineralwolle zum kontinuierlichen Wiegen von Tafeln (15, 25, 35) oder Tafelgruppen mithilfe eines Wiegeförderers (2, 12, 22), der mit einer aktiven Wiegefläche (13, 23, 33) versehen ist und eine Wiegefläche mit variabler Länge aufweist, wobei in dem Verfahren
- die zu wiegenden Tafeln (15, 25, 35) einzeln oder in Gruppen als Wiegeeinheiten über die aktive Wiegefläche (13, 23, 33) eines Wiegeförderers (2, 12, 22) geführt werden,
- die Tafeln (15, 25, 35) gewogen werden, während sie sich auf der aktiven Wiegefläche (13, 23, 33) befinden,
- die Länge der Wiegefläche so angepasst ist, dass sich bei normalem Betrieb während des Wiegevorgangs nur eine Wiegeeinheit von Tafeln (15, 25, 35) auf der aktiven Wiegefläche (13, 23, 33) befindet,
**dadurch gekennzeichnet, dass** die Länge der aktiven Wiegefläche (13, 23, 33) an die gewünschte Wiegelänge angepasst wird, indem die Tafeln (15, 25, 35) mithilfe eines Variationsförderers (4, 14, 24) von der aktiven Wiegefläche (13, 23, 33) des Wiegeförderers (2, 12, 22) auf eine Ebene über der Wiegefläche des Wiegeförderers (2, 12, 22) angehoben werden, nachdem die Tafeln (15, 25, 35) über eine Distanz transportiert wurden, die der gewünschten Wiegelänge entspricht.

2. Verfahren nach Anspruch 1, **dadurch gekennzeichnet, dass** die Länge der aktiven Wiegefläche (13, 23, 33) auf Basis der Länge der zu wiegenden Tafeln (15, 25, 35) angepasst wird.

3. Verfahren nach Anspruch 1, **dadurch gekennzeichnet, dass** die Tafeln (15, 25, 35) von der aktiven Wiegefläche (13, 23, 33) des Wiegeförderers (2, 12, 22) angehoben werden, indem die Bänder des Variationsförderers (4, 14, 24) nach oben zwischen und/oder auf die Seite der Bänder des Wiegeförderers (2, 12, 22) bewegt werden.

4. Verfahren nach Anspruch 1, **dadurch gekennzeichnet, dass** die Länge der aktiven Wiegefläche (13, 23, 33) mithilfe eines beweglichen Variationsförderers (4, 14, 24) stufenlos angepasst wird, welcher zwischen die Bänder des Wiegeförderers (2, 12, 22) gedrückt wird, um die Tafeln (15, 25, 35) oder Tafelgruppen von der aktiven Wiegefläche (13, 23, 33) des Wiegeförderers (2, 12, 22) anzuheben.

5. Verfahren nach Anspruch 1, **dadurch gekennzeichnet, dass** die Länge der aktiven Wiegefläche (13, 23, 33) mithilfe eines gelenkigen beweglichen Variationsförderers (4, 14, 24) stufenweise angepasst wird, welcher zwischen die Bänder des Wiegeförderers (2, 12, 22) gedrückt wird, um die Tafeln (15, 25, 35) oder Tafelgruppen von der aktiven Wiegefläche (13, 23, 33) des Wiegeförderers (2, 12, 22) anzuheben.

6. Vorrichtung in der Herstellung von Mineralwolle zum kontinuierlichen Wiegen von Tafeln (15, 25, 35) oder Tafelgruppen, wobei die Vorrichtung
- einen Wiegeförderer (2, 12, 22) aufweist, welcher
- mindestens zwei nebeneinander angeordnete Bänder und
- eine aktive Wiegefläche (13, 23, 33) umfasst, über welche die zu wiegenden Tafeln (15, 25, 35) einzeln oder in Gruppen als eine Wiegeeinheit transportiert werden, wobei die aktive Wiegefläche (13, 23, 33) eine variable Länge aufweist, wobei die Länge der aktiven Wiegefläche (13, 23, 33) so angepasst ist, dass sich im normalen Betrieb nur die Tafeln (15, 25, 35) einer Wiegeeinheit auf der aktiven Wiegefläche (13, 23, 33) befinden,
**dadurch gekennzeichnet, dass** die Vorrichtung einen Variationsförderer (4, 14, 24) aufweist, der angeordnet ist, um bezüglich des Wiegeförderers (2, 12, 22) bewegt werden zu können, sodass der Variationsförderer (4, 14, 24) die zu wiegenden Tafeln (15, 25, 35) während des Wiegevorgangs von der aktiven Wiegefläche (13, 23, 33) des Wiegeförderers (2, 12, 22) auf eine Ebene über der Wiegefläche des Wiegeförderers (2, 12, 22) anhebt, nachdem die Tafeln (15, 25, 35) über eine Distanz transportiert wurden, die der gewünschten Wiegelänge entspricht.

7. Vorrichtung nach Anspruch 6, **dadurch gekennzeichnet, dass** die Länge der aktiven Wiegefläche (13, 23, 33) des Wiegeförderers auf Basis der Länge der zu wiegenden Tafeln (15, 25, 35) angepasst wird.

8. Vorrichtung nach Anspruch 6, **dadurch gekennzeichnet, dass** die Bänder des Variationsförderers (4, 14, 24) zwischen und/oder auf der Seite der Bänder des Wiegeförderers (2, 12, 22) angeordnet sind.

9. Vorrichtung nach Anspruch 6, **dadurch gekennzeichnet, dass** der Variationsförderer (4, 14, 24) mit einem oder mehreren Gelenken (30, 30') ausgebildet ist.

10. Vorrichtung nach Anspruch 6, **dadurch gekennzeichnet, dass** der Variationsförderer (4, 14, 24) beweglich ist, sodass seine Bänder stufenlos zwischen die Bänder des Wiegeförderers (2, 12, 22) gedrückt werden können.

11. Vorrichtung nach Anspruch 6, **dadurch gekennzeichnet, dass** der Variationsförderer (4, 14, 24) um sein Ende rotiert werden kann, sodass die Transportfläche des Variationsförderers (4, 14, 24) schräg nach oben bewegt werden kann.

## Revendications

1. Procédé concernant la fabrication de laine minérale permettant de peser en continu des plaques (15, 25, 35) ou des groupes de plaques à l'aide d'un transporteur de pesage (2, 12, 22) pourvu d'une surface active de pesage (13, 23, 33) et comportant une surface de pesage présentant une longueur variable, procédé dans lequel
- les plaques (15, 25, 35) à peser sont dirigées, de façon séparée ou par groupes, sous la forme d'unité de pesage, sur la surface active de pesage (13, 23, 33) d'un transporteur de pesage (2, 12, 22),
- les plaques (15, 25, 35) sont pesées pendant qu'elles sont placées sur la surface active de pesage (13, 23, 33),
- la longueur de la surface de pesage est réglée de telle sorte que, lors d'un fonctionnement normal, une seule unité de pesage de plaques (15, 25, 35) est placée sur la surface active de pesage (13, 23, 33) pendant le pesage, **caractérisé en ce que** la longueur de la surface active de pesage (13, 23, 33) est réglée à la longueur de pesage souhaitée en soulevant, à l'aide d'un transporteur à déviation (4, 14, 24), les plaques (15, 25, 35) à partir de la surface active de pesage (13, 23, 33) du transporteur de pesage (2, 12, 33) lorsque les plaques (15, 25, 35) ont été transportées sur une certaine distance, laquelle correspond à la longueur de pesage souhaitée, vers un niveau situé au-dessus de la surface de pesage du transporteur de pesage (2, 12, 22).

2. Procédé selon la revendication 1, **caractérisé en ce que** la longueur de la surface active de pesage (13, 23, 33) est réglée sur la base de la longueur des plaques (15, 25, 35) à peser.

3. Procédé selon la revendication 1, **caractérisé en ce que** les plaques (15, 25, 35) sont soulevées à partir de la surface active de pesage (13, 23, 33) du transporteur de pesage (2, 12, 22) en faisant se déplacer vers le haut les courroies du transporteur à déviation (4, 14, 24) entre et/ou sur le côté des courroies du transporteur de pesage (2, 12, 22).

4. Procédé selon la revendication 1, **caractérisé en ce que** la longueur de la surface active de pesage (13, 23, 33) est réglée d'une façon continue à l'aide d'un transporteur à déviation mobile (4, 14, 24), lequel est poussé entre les courroies du convoyeur de pesage (2, 12, 22) afin de soulever les plaques (15, 25, 35) ou les groupes de plaques à partir de la surface active de pesage (13, 23, 33) du transporteur de pesage (2, 12, 22).

5. Procédé selon la revendication 1, **caractérisé en ce que** la longueur de la surface active de pesage (13, 23, 33) est réglée par étapes à l'aide d'un transporteur à déviation mobile articulé (4, 14, 24) afin de soulever les plaques (15, 25, 35) ou les groupes de plaques à partir de la surface active de pesage (13, 23, 33) du transporteur de pesage (2, 12, 22).

6. Système concernant la fabrication de laine minérale permettant de peser en continu des plaques (15, 25, 35) ou des groupes de plaques, lequel système comporté :
- un transporteur de pesage (2, 12, 22), lequel comprend
- au moins deux courroies disposées côte à côte,
- une surface active de pesage (13, 23, 33) sur laquelle les plaques (15, 25, 35) à peser sont transportées, de façon séparée ou par groupes, sous la forme d'une unité de pesage, la surface active de pesage (13, 23, 33) présentant une longueur variable, dans lequel la longueur de la surface active de pesage (13, 23, 33) est réglée de telle sorte que, dans un fonctionnement normal, les plaques (15, 25, 35) de seulement une unité de pesage sont placées sur la surface active de pesage (13, 23, 33),
**caractérisé en ce que** le système comprend un transporteur à déviation (4, 14, 24) qui est agencé de façon à être mobile par rapport au transporteur de pesage (2, 12, 22), de sorte que le transporteur à déviation (4, 14, 24) soulève les plaques (15, 25, 35) à peser à partir de la surface active de pesage (13, 23, 33) du transporteur de pesage (2, 12, 22), lorsque les plaques (15, 25, 35) ont été transportées sur une certaine distance, laquelle correspond à la longueur de pesage souhaitée, jusqu'à un niveau situé au-dessus de la surface de pesage du transporteur de pesage (2, 12, 22) pendant le pesage.

7. Système selon la revendication 6, **caractérisé en ce que** la longueur de la surface active de pesage (13, 23, 33) du transporteur de pesage (2, 12, 22) est réglée sur la base de la longueur des plaques (15, 25, 35) à peser.

8. Système selon la revendication 6, **caractérisé en ce que** les courroies du transporteur à déviation (4, 14, 24) sont agencées entre et/ou sur le côté des courroies du transporteur de pesage (2, 12, 22).

9. Système selon la revendication 6, **caractérisé en ce que** le transporteur à déviation (4, 14, 24) est articulé à l'aide d'un ou de plusieurs joint(s) articulé(s) (30, 30').

10. Système selon la revendication 6, **caractérisé en ce que** le transporteur à déviation (4, 14, 24) est mobile, de telle sorte que ses courroies puissent être poussées entre les courroies du transporteur de pesage (2, 12, 22) d'une façon continue.

11. Système selon la revendication 6, **caractérisé en ce que** le transporteur à déviation (4, 14, 24) peut tourner autour de son extrémité de telle sorte que la surface de transport du transporteur à déviation (4, 14, 24) peut être faite de façon à se déplacer obliquement vers le haut.
